# EUROPEAN PATENT APPLICATION

(11) **EP 4 752 528 A1**
(43) Date of publication of application: **03.06.2026**
(21) Application number: 24822874.4
(22) Date of filing: 14.08.2024
(51) Int. Cl.: G01N 15/1434

(54) **FLOW RAMAN SORTING METHOD AND HIGH-LUMINOUS-FLUX FLOW RAMAN SORTING DEVICE**

(30) Priority: 16.01.2024 CN 202410060771
(71) Applicant: Qingdao Single-Cell Biotechnology Co., Ltd., Qingdao, Shandong 266000 (CN)
(72) Inventor: HOU, Xibao, Qingdao, Shandong 266000 (CN); JI, Yuetong, Qingdao, Shandong 266000 (CN); LIU, Cunna, Qingdao, Shandong 266000 (CN); LI, Yuan, Qingdao, Shandong 266000 (CN); ZHOU, Jinlong, Qingdao, Shandong 266000 (CN)
(74) Representative: Metida
(86) International application number: PCT/CN2024/111912
(87) International publication number: WO 2024/255929

(57) **Abstract**

The present application discloses a flow Raman cell sorting method and a flow Raman cell sorting device with high optical throughput; the method comprises: overlapping and focusing a Raman laser and an optical trapping near-infrared laser to form a Raman excitation detection site, and setting the site at a tip of a terminal electrode of the dielectric focusing electrodes in the dielectric microfluidic chip; focusing a photothermal oscillating near-infrared laser on the terminal electrode, without overlapping with the site; by switching between the optical trapping near-infrared laser and the photothermal oscillating near-infrared laser, capturing and fixing a single cell sample at the site by an optical trapping force generated by the optical trapping near-infrared laser, or generating bubbles by photothermal effect generated by the photothermal oscillating near-infrared laser, thereby a cell sample adhered to the terminal electrode is oscillation separated by the bubbles.

## Description

The present application claims the priority benefit of Chinese application No. 202410060771.3, filed on January 16, 2024, entitled "Flow Raman Cell Sorting Method and Flow Raman Cell Sorting Device with High Optical Throughput", the entirety of which is hereby incorporated by reference.

### TECHNICAL FIELD

The present application belongs to the field of flow Raman cell sorting, and specifically relates to a flow Raman cell sorting method and a flow Raman cell sorting device with high optical throughput.

### BACKGROUND ART

Flow Raman sorter is a single-cell detection and sorting instrument based on Raman spectroscopy technology. Due to small size, low component content, and diverse nature of single cells, the manipulation and analysis thereof are extremely challenging. Therefore, how to maintain the fixation of single cells under a flow state for Raman signal collection and how to obtain high-sensitivity Raman spectra are two most critical problems.

Regarding fixation of single-cells, methods based on principles such as dielectric capture and optical trap capture have been developed; however, the applicability of the two principles differs, thus limiting the application of the two kinds of devices. Especially, in dielectric capture, a large number of cells tend to adhere to the electrodes, requiring certain methods to oscillate and separate them to ensure that each single cell is detected and sorted.

### SUMMARY OF THE INVENTION

A first aspect of the present application provides a flow Raman cell sorting method, used in a dielectric microfluidic chip; the dielectric microfluidic chip comprises dielectric focusing electrodes and a sorting electrode; and the flow Raman cell sorting method comprises:
overlapping and focusing a Raman laser and an optical trapping near-infrared laser to form a Raman excitation detection site, and setting the Raman excitation detection site at a tip of a terminal electrode of the dielectric focusing electrodes in the dielectric microfluidic chip;
focusing a photothermal oscillating near-infrared laser on the terminal electrode of the dielectric focusing electrodes in the dielectric microfluidic chip, without overlapping with the Raman excitation detection site;
by switching between the optical trapping near-infrared laser and the photothermal oscillating near-infrared laser, capturing and fixing a single cell sample at the Raman excitation detection site by an optical trapping force generated by the optical trapping near-infrared laser, or generating bubbles by photothermal effect generated by the photothermal oscillating near-infrared laser, thereby a cell sample adhered to the terminal electrode of the dielectric focusing electrodes is oscillation separated by the bubbles.

In some embodiments of the first aspect, a distance between an optical spot formed by the photothermal oscillating near-infrared laser on the terminal electrode of the dielectric focusing electrodes and the Raman excitation detection site is 5-15µm.

In some embodiments of the first aspect, optical spot formed by the photothermal oscillating near-infrared laser on the terminal electrode of the dielectric focusing electrodes and the Raman excitation detection site are both located on a central axis of the tip of the terminal electrode of the dielectric focusing electrodes.

A second aspect of the present application provides a near-infrared optical system for a flow Raman cell sorting device; wherein the flow Raman cell sorting device sorts cells by a dielectric microfluidic chip; the dielectric microfluidic chip comprises dielectric focusing electrodes and a sorting electrode; and the near-infrared optical system comprises:
a near-infrared laser generator;
a polarizing beamsplitter prism, configured to receive a near-infrared laser emitted by the near-infrared laser generator and split the near-infrared laser into an optical trapping near-infrared laser and a photothermal oscillating near-infrared laser;
a first shutter and a first Galileo beam expansion assembly, located in an optical path of the photothermal oscillating near-infrared laser; a second shutter and a second Galileo beam expansion assembly, located in an optical path of the optical trapping near-infrared laser;
optical path adjustment components, configured to receive the optical trapping near-infrared laser and the photothermal oscillating near-infrared laser; and by adjusting the optical path adjustment components, a Raman excitation detection site formed by the optical trapping near-infrared laser on a terminal electrode of the dielectric focusing electrodes of the dielectric microfluidic chip and an optical spot formed by the photothermal oscillating near-infrared laser on the terminal electrode do not overlap with each other, so that the optical trapping near-infrared laser acts on a tip of the terminal electrode to generate an optical trapping force, or the photothermal oscillating near-infrared laser acts on the terminal electrode to generate a bubble oscillation force through photothermal effect.

In some embodiments of the second aspect, the optical path adjustment components comprises:
a transflective beam displacement plate, arranged obliquely, and coaxially arranged with the polarizing beamsplitter prism and the optical path of the photothermal oscillating near-infrared laser;
a first reflector and a second reflector, disposed in the optical path of the optical trapping near-infrared laser; wherein, the first reflector is configured to reflect the optical trapping near-infrared laser reflected by the polarizing beamsplitter prism; the second reflector is configured to reflect the optical trapping near-infrared laser reflected by the first reflector to the transflective beam displacement plate; and
a third reflector, configured to receive the optical trapping near-infrared laser reflected by the transflective beam displacement plate or receive the photothermal oscillating near-infrared laser transmitted through the transflective beam displacement plate.

A third aspect of the present application provides a flow Raman cell sorting device with high optical throughput, comprising:
a triple-axis translation table; a visible-light microscope objective for receiving a Raman signal collection and detection optical path and a near-infrared microscope objective for receiving the near-infrared lasers emitted by the near-infrared optical system are provided above and below the triple-axis translation table, respectively;
a Raman excitation optical path, a microscopic imaging optical path, and a coaxial Koehler illumination optical path, configured to be able to pass through the Raman signal collection and detection optical path and be able to combine into the Raman signal collection and detection optical path respectively through a first low-wavenumber Raman filter, a pellicle beamsplitter and a plate beamsplitter; and
the pellicle beamsplitter and the plate beamsplitter are rotatably arranged, and by rotating, the microscopic imaging optical path and the coaxial Koehler illumination optical path are able to combine into the Raman signal collection and detection optical path or do not obstruct the Raman signal collection and detection optical path.

Another embodiment of the third aspect of the present application provides a flow Raman cell sorting device with high optical throughput, comprising the near-infrared optical system in the second aspect above.

In some embodiments of the third aspect, the flow Raman cell sorting device with high optical throughput further comprises:
a Raman signal collection and detection optical system, configured to form a Raman signal collection and detection optical path for collecting and detecting Raman signals;
a Raman excitation optical system, configured to form a Raman excitation optical path for providing a laser source for exciting the Raman signals; the Raman excitation optical path is arranged passing through the Raman signal collection and detection optical path; a first low-wavenumber Raman filter is disposed at an intersection of the Raman excitation optical path and the Raman signal collection and detection optical path, and the Raman excitation optical path combines into the Raman signal collection and detection optical path through the first low-wavenumber Raman filter;
a microscopic imaging optical system, configured to form a microscopic imaging optical path for providing visualized cell morphology and spatial position; the microscopic imaging optical path is able to pass through the Raman signal collection and detection optical path; and a pellicle beamsplitter is disposed adjacent to an intersection of the microscopic imaging optical path and the Raman signal collection and detection optical path;
a coaxial Koehler illumination optical system, configured to form a coaxial Koehler illumination optical path to provide illumination for microscopic imaging; the coaxial Koehler illumination optical path is able to pass through the Raman signal collection and detection optical path; a plate beamsplitter is disposed adjacent to an intersection of the coaxial Koehler illumination optical path and the Raman signal collection and detection optical path; and
a triple-axis translation table, with a visible-light microscope objective for receiving the Raman signal collection and detection optical path and a near-infrared microscope objective for receiving the near-infrared lasers emitted by the near-infrared optical system located above and below the triple-axis translation table, respectively;
wherein, the pellicle beamsplitter and the plate beamsplitter are rotatably arranged; by rotating, the pellicle beamsplitter and the plate beamsplitter are able to enter into the Raman signal collection and detection optical path and respectively reflect the microscopic imaging optical path and the coaxial Koehler illumination optical path into the visible-light microscope objective to achieve microscopic imaging; or, by rotating oppositely, the pellicle beamsplitter and the plate beamsplitter are able to remove from the Raman signal collection and detection optical path to avoid loss of optical throughput of the Raman signal collection and detection optical path.

In some embodiments of the third aspect, the Raman excitation optical path, the microscopic imaging optical path, and the coaxial Koehler illumination optical path are arranged in parallel.

In some embodiments of the third aspect, the Raman signal collection and detection optical system comprises a conjugate mechanical spatial filtering assembly, an off-axis aspheric mirror, a second low-wavenumber Raman filter, a relay optical path assembly, and a spectrometer, arranged sequentially along the Raman signal collection and detection optical path;
the Raman excitation optical system comprises a Raman single-longitudinal-mode laser generator, a third Galileo beam expansion assembly, and a conjugate Rayleigh line filtering assembly, arranged sequentially along the Raman excitation optical path;
the microscopic imaging optical system comprises an imaging lens, a notch filter assembly, and a high-resolution camera;
the coaxial Koehler illumination optical system comprises an LED and a coaxial Koehler illumination assembly, arranged sequentially along the coaxial Koehler illumination optical path.

A fourth aspect of the present application provides a sorting method based on the flow Raman cell sorting device with high optical throughput described in any one of the preceding aspects, comprising a dielectric capture flow Raman cell sorting method and an optical trap capture flow Raman cell sorting method;
the dielectric capture flow Raman cell sorting method comprises:
loading a cell sample driven by a sample driving pressure; rotating the pellicle beamsplitter and the plate beamsplitter to combine the microscopic imaging optical path and the coaxial Koehler illumination optical path into the Raman signal collection and detection optical path for real-time observation of cell state; applying periodic dielectric signals to the dielectric focusing electrodes; controlling a flow speed of the cell sample by controlling dielectric switching sequence and adjusting the sample driving pressure, causing the cell sample to be focused by the dielectric focusing electrodes, thereby achieving focused flow of single cells and enabling each single cell to be captured at the tip of the terminal electrode of the dielectric focusing electrodes, namely, at the Raman excitation detection site;
turning on the Raman excitation optical path to emit a Raman excitation source; focusing the cell sample located at the tip of the terminal electrode of the dielectric focusing electrodes by the visible-light microscope objective, and directing generated Raman signals into the Raman signal collection and detection optical path; removing the pellicle beamsplitter and the plate beamsplitter from the Raman signal collection and detection optical path by rotating the pellicle beamsplitter and the plate beamsplitter, thereby forming a single-cell Raman spectrum to provide criteria for sorting;
performing determination and identification by a host computer, and sorting the cells by applying periodic dielectric signals to the sorting electrode;
during the above process, keeping the optical path of the optical trapping near-infrared laser turned off, and intermittently turning on the optical path of the photothermal oscillating near-infrared laser; adjusting a position of the photothermal oscillating near-infrared laser by adjusting the optical path adjustment components, and generating bubble oscillation force by photothermal effect, thereby oscillating and separating each cell adhered to the tip of the terminal electrode of the dielectric focusing electrodes;
the optical trap capture flow Raman cell sorting method comprises:
   loading a cell sample driven by a sample driving pressure, rotating the pellicle beamsplitter and the plate beamsplitter to combine the microscopic imaging optical path and the coaxial Koehler illumination optical path into the Raman signal collection and detection optical path for real-time observation of cell state; introducing a double-layer sheath fluid into the dielectric microfluidic chip to form a pinch flow; adjusting the sample driving pressure to control a flow rate of the cell sample and a flow rate of the sheath fluid, so that the cell sample in the dielectric microfluidic chip forms a single-cell flow line by passing a central flow field of the Raman excitation detection site;
   turning on the optical path of the optical trapping near-infrared laser, capturing the cell sample located at the Raman excitation detection site by the optical trapping near-infrared laser, and pausing the sample driving pressure simultaneously;
   turning on the Raman excitation optical path to emit a Raman excitation source; focusing the cell sample located at the tip of the terminal electrode of the dielectric focusing electrodes by the visible-light microscope objective, and directing generated Raman signals into the Raman signal collection and detection optical path; removing the pellicle beamsplitter and the plate beamsplitter from the Raman signal collection and detection optical path by rotating the pellicle beamsplitter and the plate beamsplitter, thereby forming a single-cell Raman spectrum to provide criteria for sorting;
   performing determination and identification by a host computer, and sorting the cell sample under optical trap capture by moving the triple-axis translation table.

In some embodiments of the fourth aspect, a size of the cell sample suitable in the dielectric capture flow Raman cell sorting method is 5-60µm; and a size of the cell sample suitable in the optical trap capture flow Raman cell sorting method is less than 5µm.

Compared with prior technologies, the advantageous effects of the present application are as follows:
1. In the flow Raman cell sorting method, the near-infrared optical system and the Raman cell sorting device provided in at least one embodiment of the present application, combining with the dielectric microfluidic chip, and providing with the optical trapping near-infrared laser and photothermal oscillating near-infrared laser, sing cell sample is captured and fixed at the Raman excitation detection site by optical trapping force generated by the optical trapping near-infrared laser, or bubbles are produced by the photothermal effect generated by the photothermal oscillating near-infrared laser, thereby a cell sample adhered to the terminal electrode of the dielectric focusing electrodes is oscillation separated by the bubbles; this achieves an organic combination of optical trap capture and dielectric capture (including sample oscillation function), not only greatly reduces device costs but also effectively broadens the application range of the device, demonstrating strong versatility.
2. At least one embodiment of the present application combines the optical trap capture and dielectric capture (including sample oscillation function) to design a near-infrared optical path; a single near-infrared laser generator can simultaneously achieve the organic combination of the optical trap capture and dielectric capture (including sample oscillation function), offering convenient, flexible, fast, simple, and reliable operation.
3. The flow Raman cell sorting device provided in at least one embodiment of the present application designs an optical path structure based on common optical path switching; on the one hand, it allows the excitation light to be efficiently and non-destructively illuminated on the sample; on the other hand, it ensures that the returning Raman signals are undisturbed and return to the Raman signal collection and detection optical path with the highest possible light throughput, with minimizing the number of optical components involved in the Raman signal collection and detection process, resulting in low signal loss and short collection time, ultimately achieving high-throughput measurement. Experimental verification shows that, compared with commercially available microscopic confocal Raman spectroscopy measurement systems, the flow Raman cell sorting device provided in the present application increases the Raman excitation optical throughput from a typical 50% to 85%, and the Raman signal collection optical throughput from typically no more than 30% to 41.8%, an increase of approximately 40%, enabling high-throughput detection of living single cells.
4. In the flow Raman cell sorting device provided in at least one embodiment of the present application, the entire optical paths adopts a coaxial common optical path design and a planar layout; most optical components are placed perpendicular to or at a 45° angle to the its optical axis, making each optical path relatively independent and easy to adjust; the system integration is flexible and simple, greatly reducing system debugging and maintenance costs; the optical path layout is rationally designed with appropriate turns, with highly rigid overall structure, strong resistance to vibration and impact, and high stability.

### BRIEF DESCRIPTION OF THE DRAWINGS

The accompanying drawings described herein are provided to further illustrate the present application and form a part of the present application. The schematic embodiments and descriptions thereof are used to explain the present application and do not constitute an undue limitation of the present application.
FIG. 1 is a schematic diagram showing a distribution of an optical trapping near-infrared laser and a photothermal oscillating near-infrared laser in a dielectric microfluidic chip in the present application;
FIG. 2 is a structural diagram of a near-infrared optical system provided in an embodiment of the present application;
FIG. 3 is a schematic diagram of a laser passing through a transflective beam displacement plate in the near-infrared optical system of FIG. 2;
FIG. 4 is a structural diagram of a Raman cell sorting device provided in an embodiment of the present application;
FIG. 5 is a structural diagram a Raman signal collection and detection optical system in the Raman cell sorting device provided in an embodiment of the present application;
FIG. 6 is a structural diagram of a Raman excitation optical system in the Raman cell sorting device provided in an embodiment of the present application;
FIG. 7 is a structural diagram of a microscopic imaging optical system in the Raman cell sorting device provided in an embodiment of the present application;
FIG. 8 is a structural diagram of a coaxial Koehler illumination optical system in the Raman cell sorting device provided in an embodiment of the present application;
wherein,
100 dielectric microfluidic chip; 110 dielectric focusing electrode; 111 terminal electrode; 112 tip of the terminal electrode; 120 sorting electrode;
201 Raman laser; 202 optical trapping near-infrared laser; 203 photothermal oscillating near-infrared laser; 204 Raman excitation detection site; 205 optical spot of the photothermal oscillating near-infrared laser formed on the terminal electrode;
300 near-infrared optical system; 310 near-infrared laser generator; 320 polarizing beamsplitter prism; 331 first shutter; 332 second shutter; 341 first Galileo beam expansion assembly; 342 second Galileo beam expansion assembly; 350 optical path adjustment components; 351 transflective beam displacement plate; 352 first reflector; 353 second reflector; 354 third reflector; 301 optical path of the photothermal oscillating near-infrared laser; 302 optical path of the optical trapping near-infrared laser;
400 Raman signal collection and detection optical system; 410 conjugate mechanical spatial filtering assembly; 420 off-axis aspheric mirror; 430 second low-wavenumber Raman filter; 440 relay optical path assembly; 450 spectrometer; 401 Raman signal collection and detection optical path;
500 Raman excitation optical system; 510 Raman single-longitudinal-mode laser generator; 520 third Galileo beam expansion assembly; 530 conjugate Rayleigh line filtering assembly; 501 first low-wavenumber Raman filter; 502 Raman excitation optical path;
600 microscopic imaging optical system; 610 high-resolution camera; 620 notch filter assembly; 630 imaging lens; 601 pellicle beamsplitter; 602 microscopic imaging optical path;
700 coaxial Koehler illumination optical system; 710 LED; 720 coaxial Koehler illumination assembly; 701 plate beamsplitter; 702 coaxial Koehler illumination optical path;
801 triple-axis translation table; 802 visible-light microscope objective; 803 near-infrared microscope objective;
901 serial network topology control assembly; 902 host computer.

### DETAILED DESCRIPTION OF THE EMBODIMENTS

In order to make the purpose, technical solutions, and advantages of the present application clearer, the present application is described and explained below in conjunction with the accompanying drawings and embodiments. It should be understood that the specific embodiments described herein are merely for explaining the present application and are not intended to limit the present application. All other embodiments obtained by those skilled in the art based on the embodiments provided in the present application without making creative efforts are within the scope of protection of the present application.

Obviously, the drawings described below are merely some examples or embodiments of the present application. For those skilled in the art, without making creative efforts, the present application can also be applied to other similar scenarios based on these drawings. Furthermore, it can be understood that although the efforts made in the development process may be complex and lengthy, for those skilled in the art related to the content disclosed in the present application, some design, manufacturing, or production changes based on the technical content disclosed in the present application are merely conventional technical means and should not be understood as indicating that the content disclosed in the present application is insufficient.

In the present application, the term "embodiment" means that the specific features, structures, or characteristics described in conjunction with the embodiment may be included in at least one embodiment of the present application. The appearance of this phrase in various places in the specification does not necessarily refer to the same embodiment, nor are they mutually exclusive independent or alternative embodiments. Those skilled in the art will explicitly and implicitly understand that the embodiments described in the present application can be combined with other embodiments without conflict.

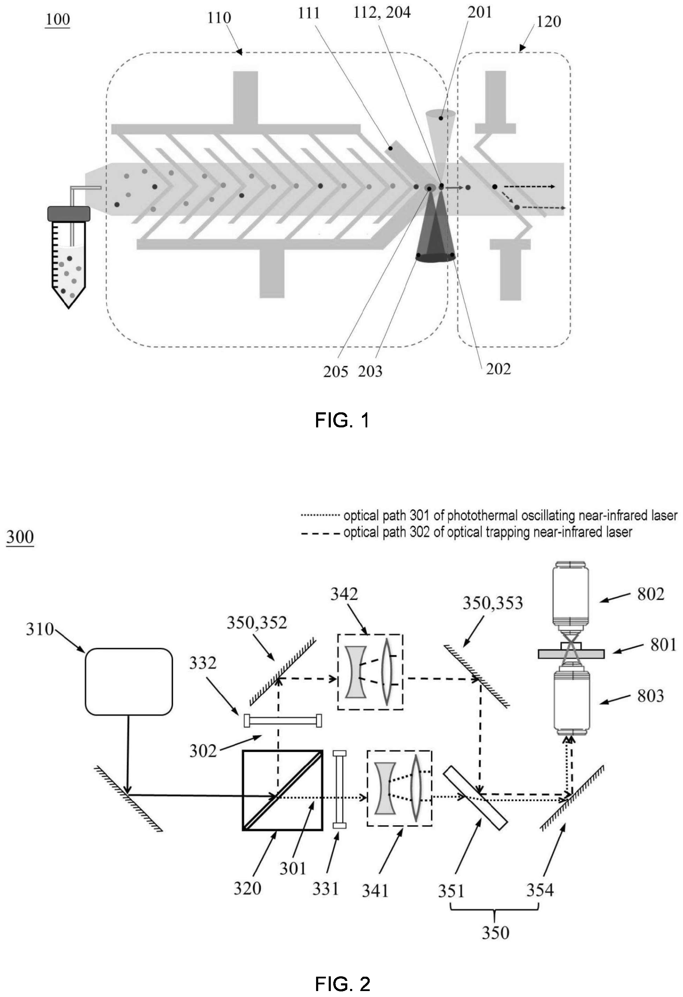

A first aspect of the present application provides a flow Raman cell sorting method, which is used in a dielectric microfluidic chip 100. As shown in FIG. 1, the dielectric microfluidic chip 100 includes dielectric focusing electrodes 110 and a sorting electrode 120; an electrode of the dielectric focusing electrodes 110 adjacent to the sorting electrode 120 is a terminal electrode 111; the terminal electrode 111 has a V-shaped structure, with a tip 112 of the V-shaped structure pointing towards the sorting electrode. The specific structures of the dielectric focusing electrodes 110 and the sorting electrode 120 are shown in FIG. 1. Since the above structures are prior art, it will not be described in detail.

In some embodiments, as shown in FIG. 1, the flow Raman cell sorting method includes: overlapping and focusing a Raman laser 201 and an optical trapping near-infrared laser 202 to form a Raman excitation detection site 204, and setting the Raman excitation detection site 204 at the tip 112 of the terminal electrode 111 of the dielectric focusing electrodes 110 of the dielectric microfluidic chip 100, i.e., at the tip 112 of the terminal electrode 111 with V-shaped structure at the far right end of the dielectric focusing electrodes 110 in FIG. 1; focusing a photothermal oscillating near-infrared laser 203 on the terminal electrode 111 of the dielectric focusing electrodes 110 of the dielectric microfluidic chip 100, without overlapping with the Raman excitation detection site 204; and by switching between the optical trapping near-infrared laser 202 and the photothermal oscillating near-infrared laser 203, capturing and fixing single cell sample at the Raman excitation detection site by an optical trapping force generated by the optical trapping near-infrared laser 202, or generating bubbles by photothermal effect generated by the photothermal oscillating near-infrared laser 203, so that a cell sample adhered to the terminal electrode 111 of the dielectric focusing electrodes 110 is subjected to oscillation separation by the bubbles.

In the above embodiments, the optical trapping near-infrared laser 202 and the photothermal oscillating near-infrared laser 203 are essentially both near-infrared lasers, but the focusing positions thereof are different, thus producing different effects; wherein, the optical trapping near-infrared laser 202 is focused at the tip 112 of the terminal electrode 111, forming an optical trap, and a single cell entering the optical trap can be captured and then detected; the photothermal oscillating near-infrared laser 203 is focused on the terminal electrode 111, and has a photothermal effect with the terminal electrode 111, thereby generating bubbles. Under the action of the bubbles, the cell is separated from the electrode.

Since the terminal electrode 111 in the dielectric focusing electrodes 110 of the dielectric microfluidic chip 100 needs to achieve both optical trapping and photothermal oscillation separation, a width of the terminal electrode 111 in the dielectric focusing electrodes 110 can be set to be greater than widths of other electrodes in the dielectric focusing electrodes 110.

In some embodiments, a distance between an optical spot 205 of the photothermal oscillating near-infrared laser 203 formed on the terminal electrode 111 of the dielectric focusing electrodes 110 and the Raman excitation detection site 204 is 5-15 µm. Considering actual size issues and to avoid focusing the near-infrared lasers on the same point, which could easily cause thermal energy generated by the photothermal effect to be unable to dissipate quickly within the small area of the electrode, leading to the tip of the electrode being directly damaged, a staggered, non-overlapping arrangement is used to reduce the probability of the above problems occurring. Preferably, a detailed distance is set to 8-12 µm.

In some embodiments, both the optical spot 205 of the photothermal oscillating near-infrared laser 203 formed on the terminal electrode 111 of the dielectric focusing electrodes 110 and the Raman excitation detection site 204 are located on a central axis of the tip of the terminal electrode 111 of the dielectric focusing electrodes 110. In an actual sorting process, under the influence of dielectric force, the cells will flow along a direction of the tip of the electrode; and the above settings can improve the photothermal oscillation effect. Here, the central axis of the tip of the terminal electrode refers to an axis that passes through the tip of the terminal electrode and bisects an angle of the V-shaped structure.

A second aspect of the present application provides a near-infrared optical system 300 for a flow Raman cell sorting device, which can be used to implement the flow Raman cell sorting method provided in the first aspect. The near-infrared optical system 300 can provide the corresponding optical trapping near-infrared laser 202 and photothermal oscillating near-infrared laser 203.

In some embodiments, as shown in FIG. 2, the near-infrared optical system 300 includes:
a near-infrared laser generator 310, serving as a laser source for optical trapping and photothermal oscillating. Optionally, a wavelength of the generated laser is in the near-infrared band, such as 785 nm or 1064 nm etc.; the selected near-infrared laser generator 310 can have characteristics such as high power (>500 mW), narrow linewidth (<1 MHz), and high stability (power stability <5%), and can be selected from existing laser generators as needed;
a polarizing beamsplitter prism 320, used to receive the near-infrared laser emitted by the near-infrared laser generator 310 and split it into the optical trapping near-infrared laser 202 and the photothermal oscillating near-infrared laser 203; specifically, the near-infrared laser reflected by the polarizing beamsplitter prism 320 forms the optical trapping near-infrared laser 202, and the near-infrared laser transmitted through the polarizing beamsplitter prism 320 forms the photothermal oscillating near-infrared laser 203;
a first shutter 331 and a first Galileo beam expansion assembly 341, located on an optical path 301 of the photothermal oscillating near-infrared laser; and a second shutter 332 and a second Galileo beam expansion assembly 342, located on an optical path 302 of the optical trapping near-infrared laser; the shutters 331, 332 are used to control the switching between turn on and turn off of respective optical paths; the Galileo beam expansion assemblies 341, 342 are configured to collimate and expand each laser to a suitable aperture, for example, an expansion ratio is limited to 2:1-7:1 depending on different entrance pupils of a near-infrared microscope objective 803, and a size of the optical spot 205 of the photothermal oscillating near-infrared laser 203 finally formed on the terminal electrode 111 of the dielectric focusing electrodes 110 is adjusted as needed;
optical path adjustment components 350, configured to receive the optical trapping near-infrared laser 202 and the photothermal oscillating near-infrared laser 203; and by adjusting the optical path adjustment components, it ensures that the Raman excitation detection site 204 formed by the optical trapping near-infrared laser 202 on the terminal electrode 111 of the dielectric focusing electrodes 110 of the dielectric microfluidic chip 100 does not overlap with the optical spot 205 formed by the photothermal oscillating near-infrared laser 203 on the terminal electrode 111 of the dielectric focusing electrodes 110 of the dielectric microfluidic chip 100, so that the optical trapping near-infrared laser 202 acts on the tip 112 of the terminal electrode 111 of the dielectric focusing electrodes 110 to generate an optical trapping force, or the photothermal oscillating near-infrared laser 203 acts on the terminal electrode 111 of the dielectric focusing electrodes 110 to generate a bubble oscillation force through the photothermal effect. The optical path adjustment components 350 can adjust the distance between the optical spot 205 formed by the photothermal oscillating near-infrared laser 203 on the terminal electrode 111 of the dielectric focusing electrodes 110 and the Raman excitation detection site 204 to be within the range of 5-15 µm.

In some embodiments, as shown in FIG. 2, the optical path adjustment components 350 includes:
a transflective beam displacement plate 351, arranged obliquely and coaxially aligned with the polarizing beamsplitter prism 320 and the optical path 301 of the photothermal oscillating near-infrared laser; the transflective beam displacement plate allows a part of the light to be transmitted and another part of the light to be reflected; the transmitted light is displaced relative to its original optical axis due to refraction. The transflective beam displacement plate may specifically be a plate beamsplitter, and the transmission and reflection ratio of the plate beamsplitter can be 30:70 to 70:30, for example, 30:70, 50:50, or 70:30 etc., which can be selected according to actual needs. Here, the transflective beam displacement plate 351 is obliquely arranged relative to an optical axis of the photothermal oscillating near-infrared laser;
a first reflector 352 and a second reflector 353, located on the optical path 302 of the optical trapping near-infrared laser; the first reflector 352 is configured to reflect the optical trapping near-infrared laser 202 reflected by the polarizing beamsplitter prism 320, optionally setting at a 45° angle relative to the optical axis; the second reflector 353 is configured to reflect the optical trapping near-infrared laser 202 reflected by the first reflector 352 to the transflective beam displacement plate 351, optionally setting at a 45° angle relative to the optical axis;
a third reflector 354, configured to receive the optical trapping near-infrared laser 202 reflected by the transflective beam displacement plate 351 or receive the photothermal oscillating near-infrared laser 203 transmitted through the transflective beam displacement plate 351. After being reflected by the third reflector 354, the optical trapping near-infrared laser 202 and the photothermal oscillating near-infrared laser 203 are focused at different positions on the terminal electrode of the dielectric focusing electrodes 110.

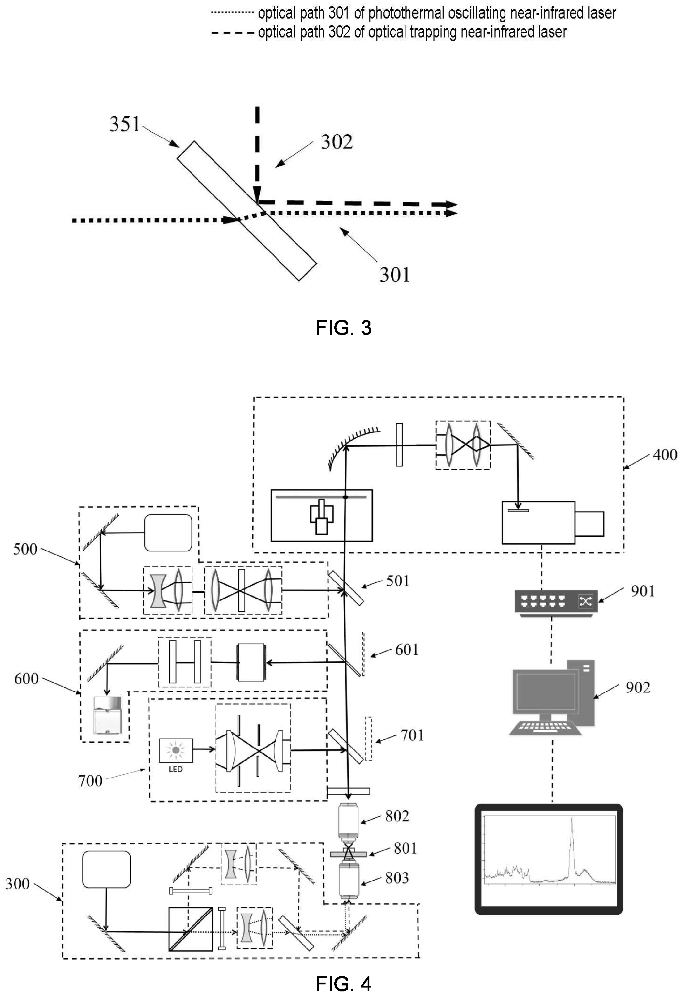

In the aforementioned optical path adjustment components, after the photothermal oscillating near-infrared laser 203 is transmitted through the transflective beam displacement plate 351, a displacement will occur relative to its original optical path direction due to refraction of the light (referring to FIG. 3); a magnitude of the displacement is directly proportional to a thickness of the transflective beam displacement plate 351. The optical path of the optical trapping near-infrared laser 202 after reflection by the transflective beam displacement plate 351 is spaced apart from and parallel to the optical path of the transmitted photothermal oscillating near-infrared laser 203. When the transflective beam displacement plate 351 is obliquely arranged at 135° to the optical axis and the third third reflector 354 is obliquely arranged at 45° to the optical axis, the optical trapping near-infrared laser 202 and the photothermal oscillating near-infrared laser 203, after being reflected by the third reflector 354, will enter the objective lens in parallel, converging to a single point and thus failing to form a distance. Therefore, by adjusting the angle of the transflective beam displacement plate 351 and/or the third reflector 354, the focal position of the optical trapping near-infrared laser 202 and the focal position of the photothermal oscillating near-infrared laser 203 on the terminal electrode 111 will not overlap. Specifically, the transflective beam displacement plate 351 and the third reflector 354 can be rotatable arranged to adjust their angles, allowing for adjustments during the sorting process based on the positions of the light spots in the imaging screen, and controlling the distance within the range of 5-15 µm.

In the embodiment shown in FIG. 2, the near-infrared laser generated by the near-infrared laser generator 310 is split into two laser beams after passing through the polarizing beamsplitter prism 320; one beam is transmitted through the polarizing beamsplitter prism 320 to form the photothermal oscillating near-infrared laser 203, which sequentially passes through the first shutter 331 and the first Galileo beam expansion assembly 341, and then is transmitted through the transflective beam displacement plate 351 and reflected by the third reflector 354 into the near-infrared microscope objective 803; the other beam is reflected by the polarizing beamsplitter prism 320 to form the optical trapping near-infrared laser 202, which sequentially passes through the second shutter 332, the first reflector 352, the second Galileo beam expansion assembly 342, and the second reflector 353 to the transflective beam displacement plate 351, is reflected by the transflective beam displacement plate 351 to the third reflector 354, and then reflected by the third reflector 354 into the near-infrared microscope objective 803.

It should be understood that, in the solutions of the present application, the optical elements on the optical paths are not exhaustively listed. For example, there may be other reflectors on the optical paths that are not described in the present application, which can be arranged according to the directions of the optical paths and are considered common knowledge in the field, and should not be considered as insufficient disclosure in the present application.

A third aspect of the present application provides a flow Raman cell sorting device with high optical throughput.

In some embodiments, as shown in FIG. 4, the flow Raman cell sorting device with high optical throughput includes:
a triple-axis translation table 801; an above part and a below part of the triple-axis translation table 801 are respectively provided with a visible-light microscope objective 802 for receiving a Raman signal collection and detection optical path 401 and a near-infrared microscope objective 803 for receiving the near-infrared lasers (the optical trapping near-infrared laser 202 or the photothermal oscillating near-infrared laser 203) emitting by the above near-infrared optical system;
a Raman excitation optical path 502, a microscopic imaging optical path 602, and a coaxial Koehler illumination optical path 702, which are configured to pass through the Raman signal collection and detection optical path 401, and are respectively combined into the Raman signal collection and detection optical path 401 through a first low-wavenumber Raman filter 501, a pellicle beamsplitter 601, and a plate beamsplitter 701;
the pellicle beamsplitter 601 and the plate beamsplitter 701 are rotatably disposed; by rotating, the microscopic imaging optical path 602 and the coaxial Koehler illumination optical path 702 are able to combined into the Raman signal collection and detection optical path 401 or do not obstruct the Raman signal collection and detection optical path 401.

In other embodiments, as shown in FIG. 4, the flow Raman cell sorting device includes: the near-infrared optical system 300 as provided in any embodiment of the second aspect of the present application, to provide the optical path 302 of the optical trapping near-infrared laser and the optical path 301 of the photothermal oscillating near-infrared laser.

The above flow Raman cell sorting device further includes:
a Raman signal collection and detection optical system 400, which forms the Raman signal collection and detection optical path 401, configured to collect and detect Raman signals; the Raman signal collection and detection optical system 400 is able to receive Raman signals emitted by the visible-light microscope objective 802 and transmit to a serial network topology control assembly 901 and a host computer 902 for detection and analysis, forming the Raman signal collection and detection optical path 401;
a Raman excitation optical system 500, which forms the Raman excitation optical path 502, configured to provide a laser source for exciting the Raman signals; the Raman excitation optical path 502 is routed along the Raman signal collection and detection optical path 401, and the first low-wavenumber Raman filter 501 is located at an intersection of the Raman excitation optical path 502 and the Raman signal collection and detection optical path 401; and the Raman excitation optical path 502 converges into the Raman signal collection and detection optical path 401 through the first low-wavenumber Raman filter 501;
a microscopic imaging optical system 600, which forms the microscopic imaging optical path 602, configured to provide visualized cell morphology and spatial position; the microscopic imaging optical path 602 is routed along the Raman signal collection and detection optical path 401, and the pellicle beamsplitter 601 is located adjacent to an intersection of the microscopic imaging optical path 602 and the Raman signal collection and detection optical path 401;
a coaxial Koehler illumination optical system 700, which forms the coaxial Koehler illumination optical path 702, configured to provide illumination for microscopic imaging; the coaxial Koehler illumination optical path 702 is routed along the Raman signal collection and detection optical path 401; and the plate beamsplitter 701 is located adjacent to an intersection of the coaxial Koehler illumination optical path 702 and the Raman signal collection and detection optical path 401;
the triple-axis translation table 801; the above part and the below part of the triple-axis translation table 801 are respectively provided with the visible-light microscope objective 802 for receiving the Raman signal collection and detection optical path 401 and the near-infrared microscope objective 803 for receiving the near-infrared lasers (the optical trapping near-infrared laser 202 or the photothermal oscillating near-infrared laser 203) emitting by the near-infrared optical system;
wherein, the pellicle beamsplitter 601 and the plate beamsplitter 701 are rotatably arranged; by rotating, the pellicle beamsplitter 601 and the plate beamsplitter 701 are able to enter into the Raman signal collection and detection optical path 401 (the pellicle beamsplitter 601 and the plate beamsplitter 701 are in the positions shown by solid lines in FIG. 4) and the microscopic imaging optical path 602 and the coaxial Koehler illumination optical path 702 are respectively reflected into the visible-light microscope objective 802 to achieve microscopic imaging; or, by rotating oppositely, the pellicle beamsplitter 601 and the plate beamsplitter 701 are removed from the Raman signal collection and detection optical path 401 (the pellicle beamsplitter 601 and the plate beamsplitter701 are in the positions shown by dashed lines in FIG. 4), to avoid loss of optical throughput of the Raman signal collection and detection optical path 401.

By setting the pellicle beamsplitter 601 and the plate beamsplitter 701 as rotatable structures, during microscopic imaging, the pellicle beamsplitter 601 and the plate beamsplitter 701 are rotated (for example, the two are at a 45-degree angle relative to the microscopic imaging optical path 602 and the coaxial Koehler illumination optical path 702, as shown by the solid lines in FIG. 4), allowing the microscopic imaging optical path 602 and the coaxial Koehler illumination optical path 702 to converge through the pellicle beamsplitter 601 and the plate beamsplitter 701 into the Raman signal collection and detection optical path 401 for microscopic imaging; during Raman signal collection and detection, the pellicle beamsplitter 601 and the plate beamsplitter 701 are rotated (for example, the two are at a 90-degree angle relative to the microscopic imaging optical path 602 and the coaxial Koehler illumination optical path 702, as shown by the dashed lines in FIG. 4), the pellicle beamsplitter 601 and the plate beamsplitter 701 are completely removed from the Raman signal collection and detection optical path 401, thereby eliminating signal splitting losses due to the coaxial common optical path and enabling high-throughput Raman signal collection. The first low-wavenumber Raman filter 501 is configured for high-throughput transmission of Raman signals; in the present application, the low-wavenumber Raman filter refers to a Raman filter with a wavenumber lower than 100cm⁻¹.

The pellicle beamsplitter 601 and the plate beamsplitter 701 are used for common optical path switching; specifically, the plate beamsplitter 701 and the pellicle beamsplitter 601 are simultaneously or non-simultaneously rotated, for example, from a 45-degree state to a 90-degree state, so that the pellicle beam splitter 601 and the plate beamsplitter 701 are completely removed from the Raman signal collection and detection optical path 401, thereby eliminating signal splitting losses due to the coaxial common optical path and enabling high-throughput Raman signal collection. Optionally, the rotations of the pellicle beamsplitter 601 and the plate beamsplitter 701 can be achieved by driving a table by an electric motor, allowing the table to rotate the pellicle beamsplitter 601 and the plate beamsplitter 701 at high speed (switching time <1s) and with high repeatability (repositioning accuracy <0.5µm); specifically, it can be achieved by those skilled in the art through purchasing existing equipment or using prior methods.

The visible-light microscope objective 802 is used for microscopic imaging of the sample and Raman signal excitation; in some embodiments, a visible-light microscope objective with high-magnification (>50X), high-NA (>0.8), ultra-flat field, and complex achromatic color is selected, for example, selecting an ultra-flat field and complex achromatic color microscope objective; in addition, those skilled in the art can select other microscope objectives according to actual circumstances. In some embodiments, the triple-axis translation table 801 is made of a high-precision structure and is used to move the dielectric microfluidic chip 100 with the built-in sample; it can achieve movement in three directions. The chip can be precisely moved forward, backward, left, right, up, and down through DC motor control; the minimum step size of movement is 20nm, the repositioning accuracy during movement is 0.5µm, and the movement range is ±20mm in the forward/backward direction, ±35mm in the left/right direction, and ± 20mm in the up/down direction; specifically, it can be achieved by those skilled in the art through purchasing existing equipment or using prior methods.

In some embodiments, the Raman excitation optical path 502, the microscopic imaging optical path 602, and the coaxial Koehler illumination optical path 702 are arranged in parallel.

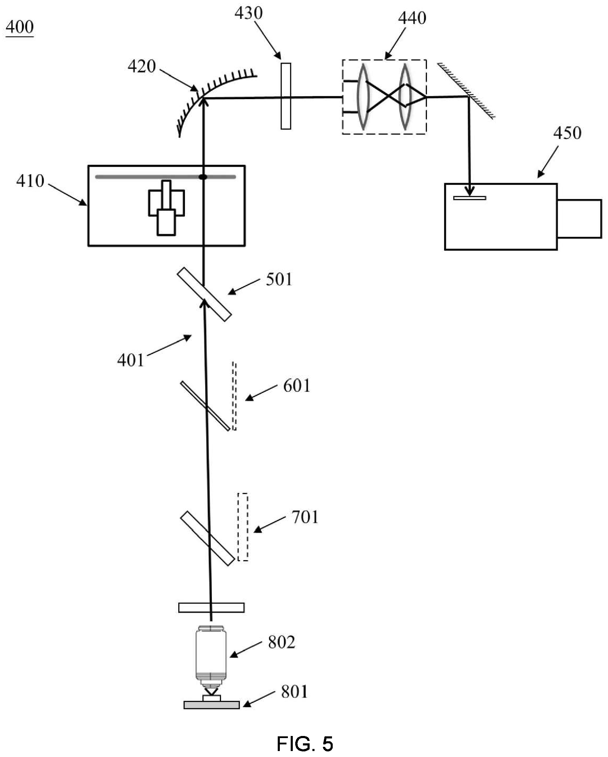

In some embodiments, as shown in FIG. 5, the Raman signal collection and detection optical system 400 includes a conjugate mechanical spatial filtering assembly 410, an off-axis aspheric mirror 420, a second low-wavenumber Raman filter 430, a relay optical path assembly 440, and a spectrometer 450, arranged sequentially along the Raman signal collection and detection optical path 401. The Raman signal collection and detection optical path is the core optical path of the device, and the function thereof is to collect and detect Raman signals with high throughput. The conjugate mechanical spatial filtering assembly 410 is configured to achieve Raman microscopic true confocal imaging; specifically, it can be a conjugate mechanical spatial pinhole filtering assembly, characterized by that, by means of an optical encoding motor, a pinhole disk in the assembly can be controlled to rotate, and pinholes with different sizes can be rotated into the optical path according to requirements, so as to prevent unwanted signals outside the microscope focal plane from reaching the detector, playing a role of spatial filtering and improving the spatial resolution of the instrument (< 1.5 µm). The off-axis aspheric mirror 420 is configured to collimate and redirect the Raman signals. The second low-wavenumber Raman filter 430 is configured to further filter out Rayleigh signals and high transmit Raman signals; optionally, the second low-wavenumber Raman filter 430 selects a low-wavenumber Raman filter with ultra-high edge steepness (0.2%), ultra-low wavenumber (<50cm⁻¹), high Rayleigh rejection rate (OD > 6), and high Raman signal transmittance (>93%). The relay optical path assembly 440 is configured to image the Raman signals onto a slit of the spectrometer 450 with high NA (Numerical Aperture) matching. The reflectors are configured to redirect optical paths. The spectrometer 450 is configured to disperse and detect the Raman signals, which is then transmitted to an image workstation to form single-cell Raman spectra, providing criteria for sorting. It is understood that the components/assembly described above are only some optional embodiments of the present application, and those skilled in the art can implement them by purchasing suitable existing components or using prior means, which should not be considered insufficient disclosure of the present application.

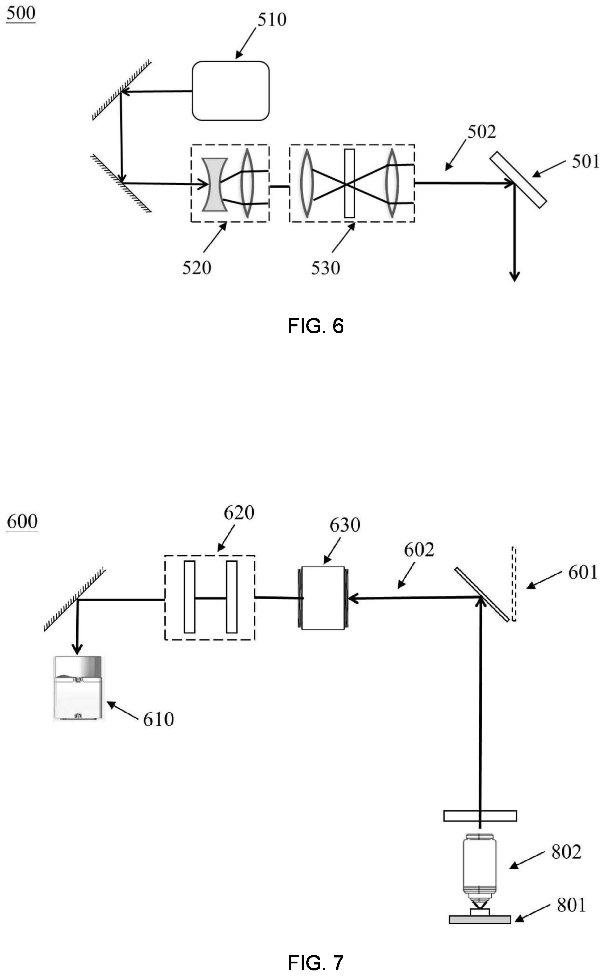

In some embodiments, as shown in FIG. 6, the Raman excitation optical system 500 includes a Raman single-longitudinal-mode laser generator 510, a third Galileo beam expansion assembly 520, and a conjugate Rayleigh line filtering assembly 530, arranged sequentially along the Raman excitation optical path 502. Specifically, the Raman excitation optical system 500 is configured to provide a narrow linewidth, highly stable excitation source for exciting Raman signals. The Raman single-longitudinal-mode laser generator 510 provides the laser source for exciting the Raman signals, with wavelengths in the visible light band such as 514.5nm, 532nm, and 632.8nm etc.; a laser generator with high-power (>200mW), narrow linewidth (<1MHz), single-longitudinal-mode (M2<1.1), and highly stability (<2%) can be selected; and these characteristics ensure that the laser spot after microscopic imaging has very high spatial resolution (<0.6µm). The third Galileo beam expansion assembly 520 is configured to collimate and expand the laser to a suitable aperture; optionally, an expansion ratio thereof is limited to 2:1-7:1 depending on different entrance pupils of the visible-light microscope objective 802. The conjugate Rayleigh line filtering assembly 530 is configured to filter out laser wavelengths other than Rayleigh light. The first low-wavenumber Raman filter 501 is configured to highly reflect the excited laser and highly block the returning Rayleigh light, thereby highly transmitting the Raman signals; specifically, a low-wavenumber Raman filter with high edge steepness (0.5%), low wavenumber (<100cm⁻¹), high excitation light reflectivity (>94%), and high Raman signal transmittance (>93%) can be selected. Appropriate reflectors can be set in the optical path for folding the optical path. It is understood that the components/assemblies with the characteristics described above are only some optional embodiments of the present application, and those skilled in the art can achieve them by purchasing existing components that meet the requirements or by using prior means, and this should not be considered as insufficient disclosure of the present application.

In some embodiments, as shown in FIG. 7, the microscopic imaging optical system 600 includes an imaging lens 630, a notch filter assembly 620, and a high-resolution camera 610, arranged sequentially along the microscopic imaging optical path 602. The microscopic imaging optical system 600 is to provide visualized cell morphology and spatial position, achieving "what you see is what you get" precise measurement; an infinity-corrected microscopic imaging system can be adopted. The sample image is reflected onto the imaging lens 630 in a coaxial common optical path manner through the pellicle beamsplitter 601; with characteristics of minimal optical path variation (<5µm), negligible ghosting, and a chromatic aberration-free focused laser beam. The imaging lens 630 is to focus the sample image onto the high-resolution camera 610; in some embodiments, a wide-field, apochromatic imaging lens capable of achieving diffraction-limited imaging across the entire field of view can be adopted. The notch filter assembly 620 is to filter out Rayleigh scattering and near-infrared laser to enable clear imaging and protect the photosensitive surface of the camera; in some embodiments, a notch filter assembly providing high OD cutoff (OD>6) for both Rayleigh scattering and near-infrared laser can be adopted. The high-resolution camera 610 is configured for sample imaging; in some embodiments, a camera with a large sensor format (≥1 inch) and high resolution (>12 megapixels) can be adopted. Appropriate reflectors can be set in the optical path for folding the optical path. It is understood that the components/assemblies with the characteristics described above are only some optional embodiments of the present application, and those skilled in the art can implement them by purchasing existing components that meet the requirements or by using prior means, and this should not be considered as insufficient disclosure of the present application.

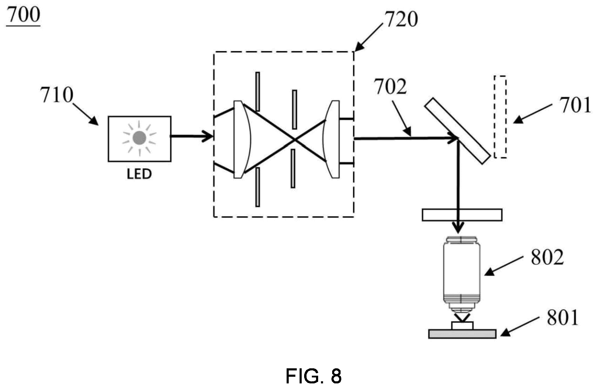

In some embodiments, as shown in FIG. 8, the coaxial Koehler illumination optical system 700 includes an LED 710 and a coaxial Koehler illumination assembly 720, arranged sequentially along the coaxial Koehler illumination optical path 702. The coaxial Koehler illumination optical system 700 provides appropriate bright field illumination for microscopic imaging. The LED adopts a white LED as light source for illumination; the coaxial Koehler illumination assembly 720 is designed based on the Koehler illumination principle and provides a highly uniform light field; the light source is introduced into the visible-light microscope objective 802 in coaxially common optical path manner through the plate beamsplitter 701.

A fourth aspect of the present application provides a sorting method based on the flow Raman cell sorting device with high optical throughput described above, including a dielectric capture flow Raman cell sorting method and an optical trap capture flow Raman cell sorting method;
the dielectric capture flow Raman cell sorting method is as follows:
a cell sample is loaded by a sample driving pressure; the pellicle beamsplitter 601 and the plate beamsplitter 701 are rotated to combine the microscopic imaging optical path 602 and the coaxial Koehler illumination optical path 702 into the Raman signal collection and detection optical path 401 for real-time observation of cell state; periodic dielectric signals are applied to the dielectric focusing electrodes 110; by controlling dielectric switching sequence and adjusting the sample driving pressure, a flow speed of the cell sample is controlled, causing the cell sample to be focused by the dielectric focusing electrodes 110, thereby achieving focused flow of single cells and enabling each single cell to be captured at the tip of the terminal electrode 111 of the dielectric focusing electrodes 110, i.e. the Raman excitation detection site 204;
the Raman excitation optical path 502 is turned on to emit a Raman excitation source; the cell sample at the tip 112 of the terminal electrode 111 of the dielectric focusing electrodes 110 is focused by the visible-light microscope objective 802, and generated Raman signals enters the Raman signal collection and detection optical path 401; by rotating the pellicle beamsplitter 601 and the plate beamsplitter 701, the pellicle beamsplitter 601 and the plate beamsplitter 701 are removed from the Raman signal collection and detection optical path 401, thereby forming a single-cell Raman spectrum to provide criteria for sorting;
a determination and identification are performed by the host computer 902, the cells are sorted by applying periodic dielectric signals to the sorting electrode 120;
during the above process, the optical path of the optical trapping near-infrared laser keeps turned off, and the optical path 301 of the photothermal oscillating near-infrared laser is turned on intermittently; by adjusting the optical path adjustment components 350, the position of the photothermal oscillating near-infrared laser 203 is adjusted, and bubble oscillation force is generated by photothermal effect, thereby oscillating and separating each cell adhered to the tip 112 of the terminal electrode 111 of the dielectric focusing electrodes 110;
the optical trap capture flow Raman cell sorting method is as follows:
   a cell sample is loaded by a sample driving pressure, the pellicle beamsplitter 601 and the plate beamsplitter 701 are rotated to combine the microscopic imaging optical path 602 and the coaxial Koehler illumination optical path 702 into the Raman signal collection and detection optical path 401 for real-time observation of cell state; a double-layer sheath fluid is introduced into the dielectric microfluidic chip 100 to form a pinch flow; the sample driving pressure is adjusted to control a flow rate of the cell sample and a flow rate of the sheath fluid, so that the cell sample in the dielectric microfluidic chip 100 forms a single-cell flow line by passing a central flow field of the Raman excitation detection site 204;
   the optical path of the optical trapping near-infrared laser is turned on, and the cell sample at the Raman excitation detection site 204 is captured by the optical trapping near-infrared laser 202, and the sample driving pressure is simultaneously paused;
   the Raman excitation optical path 502 is turned on to emit a Raman excitation source; the cell sample at the tip 112 of the terminal electrode 111 of the dielectric focusing electrodes 110 is focused by the visible-light microscope objective 802, and generated Raman signals enters the Raman signal collection and detection optical path 401; by rotating the pellicle beamsplitter 601 and the plate beamsplitter 701, the pellicle beamsplitter 601 and the plate beamsplitter 701 are removed from the Raman signal collection and detection optical path 401, thereby forming a single-cell Raman spectrum to provide criteria for sorting;
   a determination and identification are performed by the host computer 902, and the cell sample under optical trap capture is sorted by moving the triple-axis translation table 801.

In some embodiments, a size of the cell sample suitable for the dielectric capture flow Raman cell sorting method is 5-60 µm; and a size of the cell sample suitable for the optical trap capture flow Raman cell sorting method is less than 5 µm.

Although the present application has been described in detail with reference to the foregoing embodiments, those skilled in the art should understand that the technical solutions described in the foregoing embodiments can still be modified, or some technical features can be equivalently replaced; and these modifications or replacements do not cause the essence of the corresponding technical solutions to deviate from the spirit and scope of the technical solutions of the embodiments of the present application.

## Claims

1. A flow Raman cell sorting method, used in a dielectric microfluidic chip; the dielectric microfluidic chip comprises dielectric focusing electrodes and a sorting electrode; **characterized in that**, the flow Raman cell sorting method comprises:
overlapping and focusing a Raman laser and an optical trapping near-infrared laser to form a Raman excitation detection site, and setting the Raman excitation detection site at a tip of a terminal electrode of the dielectric focusing electrodes in the dielectric microfluidic chip;
focusing a photothermal oscillating near-infrared laser on the terminal electrode of the dielectric focusing electrodes in the dielectric microfluidic chip, without overlapping with the Raman excitation detection site;
by switching between the optical trapping near-infrared laser and the photothermal oscillating near-infrared laser, capturing and fixing a single cell sample at the Raman excitation detection site by an optical trapping force generated by the optical trapping near-infrared laser, or generating bubbles by photothermal effect generated by the photothermal oscillating near-infrared laser, thereby a cell sample adhered to the terminal electrode of the dielectric focusing electrodes is oscillation separated by the bubbles.

2. The sorting method according to claim 1, **characterized in that**, a distance between an optical spot formed by the photothermal oscillating near-infrared laser on the terminal electrode of the dielectric focusing electrodes and the Raman excitation detection site is 5-15µm.

3. The sorting method according to claim 1, **characterized in that**, the optical spot formed by the photothermal oscillating near-infrared laser on the terminal electrode of the dielectric focusing electrodes and the Raman excitation detection site are both located on a central axis of the tip of the terminal electrode of the dielectric focusing electrodes.

4. A near-infrared optical system for a flow Raman cell sorting device, wherein the flow Raman cell sorting device sorts cells by a dielectric microfluidic chip, and the dielectric microfluidic chip comprises dielectric focusing electrodes and a sorting electrode; **characterized in that**, the near-infrared optical system comprises:
a near-infrared laser generator;
a polarizing beamsplitter prism, configured to receive a near-infrared laser emitted by the near-infrared laser generator and split the near-infrared laser into an optical trapping near-infrared laser and a photothermal oscillating near-infrared laser;
a first shutter and a first Galileo beam expansion assembly, located in an optical path of the photothermal oscillating near-infrared laser; a second shutter and a second Galileo beam expansion assembly, located in an optical path of the optical trapping near-infrared laser;
optical path adjustment components, configured to receive the optical trapping near-infrared laser and the photothermal oscillating near-infrared laser; and by adjusting the optical path adjustment components, a Raman excitation detection site formed by the optical trapping near-infrared laser on a terminal electrode of the dielectric focusing electrodes of the dielectric microfluidic chip and an optical spot formed by the photothermal oscillating near-infrared laser on the terminal electrode do not overlap, so that the optical trapping near-infrared laser acts on a tip of the terminal electrode to generate an optical trapping force, or the photothermal oscillating near-infrared laser acts on the terminal electrode to generate a bubble oscillation force through photothermal effect.

5. The near-infrared optical system according to claim 4, **characterized in that**, the optical path adjustment components comprises:
a transflective beam displacement plate, arranged obliquely, and coaxially arranged with the polarizing beamsplitter prism and the optical path of the photothermal oscillating near-infrared laser;
a first reflector and a second reflector, disposed in the optical path of the optical trapping near-infrared laser; wherein, the first reflector is configured to reflect the optical trapping near-infrared laser reflected by the polarizing beamsplitter prism; the second reflector is configured to reflect the optical trapping near-infrared laser reflected by the first reflector to the transflective beam displacement plate; and
a third reflector, configured to receive the optical trapping near-infrared laser reflected by the transflective beam displacement plate or receive the photothermal oscillating near-infrared laser transmitted through the transflective beam displacement plate.

6. A flow Raman cell sorting device with high optical throughput, **characterized in that**, comprising:
a triple-axis translation table; a visible-light microscope objective for receiving a Raman signal collection and detection optical path and a near-infrared microscope objective for receiving the near-infrared lasers emitted by the near-infrared optical system according to claim 4 or 5 are provided above and below the triple-axis translation table, respectively;
a Raman excitation optical path, a microscopic imaging optical path, and a coaxial Koehler illumination optical path, configured to be able to pass through the Raman signal collection and detection optical path and be able to combine into the Raman signal collection and detection optical path respectively through a first low-wavenumber Raman filter, a pellicle beamsplitter and a plate beamsplitter; and
the pellicle beamsplitter and the plate beamsplitter are rotatably arranged, and by rotating, the microscopic imaging optical path and the coaxial Koehler illumination optical path are able to combine into the Raman signal collection and detection optical path or do not obstruct the Raman signal collection and detection optical path.

7. A flow Raman cell sorting device with high optical throughput, **characterized in that**, comprising the near-infrared optical system according to claim 4 or 5.

8. The flow Raman cell sorting device with high optical throughput according to claim 7, **characterized in that**, further comprises:
a Raman signal collection and detection optical system, configured to form a Raman signal collection and detection optical path for collecting and detecting Raman signals;
a Raman excitation optical system, configured to form a Raman excitation optical path for providing a laser source for exciting the Raman signals; the Raman excitation optical path is arranged passing through the Raman signal collection and detection optical path; a first low-wavenumber Raman filter is disposed at an intersection of the Raman excitation optical path and the Raman signal collection and detection optical path, and the Raman excitation optical path combines into the Raman signal collection and detection optical path through the first low-wavenumber Raman filter;
a microscopic imaging optical system, configured to form a microscopic imaging optical path for providing visualized cell morphology and spatial position; the microscopic imaging optical path is able to pass through the Raman signal collection and detection optical path; and a pellicle beamsplitter is disposed adjacent to an intersection of the microscopic imaging optical path and the Raman signal collection and detection optical path;
a coaxial Koehler illumination optical system, configured to form a coaxial Koehler illumination optical path to provide illumination for microscopic imaging; the coaxial Koehler illumination optical path is able to pass through the Raman signal collection and detection optical path; a plate beamsplitter is disposed adjacent to an intersection of the coaxial Koehler illumination optical path and the Raman signal collection and detection optical path; and
a triple-axis translation table, with a visible-light microscope objective for receiving the Raman signal collection and detection optical path and a near-infrared microscope objective for receiving the near-infrared lasers emitted by the near-infrared optical system located above and below the triple-axis translation table, respectively;
wherein, the pellicle beamsplitter and the plate beamsplitter are rotatably arranged; by rotating, the pellicle beamsplitter and the plate beamsplitter are able to enter into the Raman signal collection and detection optical path and respectively reflect the microscopic imaging optical path and the coaxial Koehler illumination optical path into the visible-light microscope objective to achieve microscopic imaging; or, by rotating oppositely, the pellicle beamsplitter and the plate beamsplitter are able to remove from the Raman signal collection and detection optical path to avoid loss of optical throughput of the Raman signal collection and detection optical path.

9. The flow Raman cell sorting device with high optical throughput according to claim 6 or 8, **characterized in that**, the Raman excitation optical path, the microscopic imaging optical path, and the coaxial Koehler illumination optical path are arranged in parallel.

10. The flow Raman cell sorting device with high optical throughput according to claim 6 or 8, **characterized in that**,
the Raman signal collection and detection optical system comprises a conjugate mechanical spatial filtering assembly, an off-axis aspheric mirror, a second low-wavenumber Raman filter, a relay optical path assembly, and a spectrometer, arranged sequentially along the Raman signal collection and detection optical path;
the Raman excitation optical system comprises a Raman single-longitudinal-mode laser generator, a third Galileo beam expansion assembly, and a conjugate Rayleigh line filtering assembly, arranged sequentially along the Raman excitation optical path;
the microscopic imaging optical system comprises an imaging lens, a notch filter assembly, and a high-resolution camera; and
the coaxial Koehler illumination optical system comprises an LED and a coaxial Koehler illumination assembly, arranged sequentially along the coaxial Koehler illumination optical path.

11. A sorting method based on the flow Raman cell sorting device with high optical throughput according to any one of claims 6-10, **characterized in that**, comprising a dielectric capture flow Raman cell sorting method and an optical trap capture flow Raman cell sorting method;
the dielectric capture flow Raman cell sorting method comprises:
loading a cell sample driven by a sample driving pressure; rotating the pellicle beamsplitter and the plate beamsplitter to combine the microscopic imaging optical path and the coaxial Koehler illumination optical path into the Raman signal collection and detection optical path for real-time observation of cell state; applying periodic dielectric signals to the dielectric focusing electrodes; controlling a flow speed of the cell sample by controlling dielectric switching sequence and adjusting the sample driving pressure, causing the cell sample to be focused by the dielectric focusing electrodes, thereby achieving focused flow of single cells and enabling each single cell to be captured at the tip of the terminal electrode of the dielectric focusing electrodes, namely, at the Raman excitation detection site;
turning on the Raman excitation optical path to emit a Raman excitation source; focusing the cell sample located at the tip of the terminal electrode of the dielectric focusing electrodes by the visible-light microscope objective, and directing generated Raman signals into the Raman signal collection and detection optical path; removing the pellicle beamsplitter and the plate beamsplitter from the Raman signal collection and detection optical path by rotating the pellicle beamsplitter and the plate beamsplitter, thereby forming a single-cell Raman spectrum to provide criteria for sorting;
performing determination and identification by a host computer, and sorting the cells by applying periodic dielectric signals to the sorting electrode; and
during the above process, keeping the optical path of the optical trapping near-infrared laser turned off, and intermittently turning on the optical path of the photothermal oscillating near-infrared laser; adjusting a position of the photothermal oscillating near-infrared laser by adjusting the optical path adjustment components, and generating bubble oscillation force by photothermal effect, thereby oscillating and separating each cell adhered to the tip of the terminal electrode of the dielectric focusing electrodes;
the optical trap capture flow Raman cell sorting method comprises:
loading a cell sample driven by a sample driving pressure, rotating the pellicle beamsplitter and the plate beamsplitter to combine the microscopic imaging optical path and the coaxial Koehler illumination optical path into the Raman signal collection and detection optical path for real-time observation of cell state; introducing a double-layer sheath fluid into the dielectric microfluidic chip to form a pinch flow; adjusting the sample driving pressure to control a flow rate of the cell sample and a flow rate of the sheath fluid, so that the cell sample in the dielectric microfluidic chip forms a single-cell flow line by passing a central flow field of the Raman excitation detection site;
turning on the optical path of the optical trapping near-infrared laser, capturing the cell sample located at the Raman excitation detection site by the optical trapping near-infrared laser, and pausing the sample driving pressure simultaneously;
turning on the Raman excitation optical path to emit a Raman excitation source; focusing the cell sample located at the tip of the terminal electrode of the dielectric focusing electrodes by the visible-light microscope objective, and directing generated Raman signals into the Raman signal collection and detection optical path; removing the pellicle beamsplitter and the plate beamsplitter from the Raman signal collection and detection optical path by rotating the pellicle beamsplitter and the plate beamsplitter, thereby forming a single-cell Raman spectrum to provide criteria for sorting; and
performing determination and identification by a host computer, and sorting the cell sample under optical trap capture by moving the triple-axis translation table.

12. The sorting method according to claim 11, **characterized in that**, a size of the cell sample suitable in the dielectric capture flow Raman cell sorting method is 5-60µm; and a size of the cell sample suitable in the optical trap capture flow Raman cell sorting method is less than 5µm.
